# EUROPÄISCHE PATENTSCHRIFT

(11) **EP 2 287 029 B1**
(45) Veröffentlichungstag und Bekanntmachung des Hinweises auf die Patenterteilung: **04.09.2013**
(21) Anmeldenummer: 10007494.7
(22) Anmeldetag: 20.07.2010
(51) Int. Cl.: B60J 7/22

(54) **Rollosystem für ein Kraftfahrzeug**
Roller blind system for a motor vehicle
Système de store pour un véhicule automobile

(30) Priorität: 10.08.2009 DE 102009037824
(43) Veröffentlichungstag der Anmeldung: 23.02.2011
(73) Patentinhaber: BOS GmbH & Co. KG, 73760 Ostfildern (DE)
(72) Erfinder: Ehrenberger, Marina, 73061 Ebersbach (DE); Sauer, Roman, 72766 Reutlingen/Sondelfingen (DE)
(74) Vertreter: Patentanwälte Ruff, Wilhelm, Beier, Dauster & Partner

(56) Entgegenhaltungen:
- EP-A1- 0 599 811
- EP-A1- 1 514 714
- EP-A2- 1 568 526
- EP-A2- 2 014 492
- WO-A2-2005/080105
- DE-A1- 19 536 552
- DE-A1-102006 046 445
- DE-A1-102008 006 157
- DE-C1- 4 037 705
- DE-C1- 4 430 672

## Beschreibung

Die Erfindung betrifft ein Schutz- oder Beschattungssystem für ein Kraftfahrzeug, insbesondere ein Windschott-System für ein Cabrio-Fahrzeug.

Ein solches gattungsgemäßes Schutz- oder Beschattungssystem weist eine Basis, ein zwischen einer Ruhestellung und einer Funktionsstellung von der Basis weg in einer Ausziehrichtung ausziehbares Flächengebilde, ein am Flächengebilde befestigtes starres Endelement, das bezogen auf die Basis am distalen Ende des Flächengebildes vorgesehen ist, und eine einerseits an der Basis und andererseits am Endelement befestigten Auszugsvorrichtung auf. Dabei ist die Auszugsvorrichtung dafür ausgebildet, durch eine mechanische Beaufschlagung mittels eines Antriebsmittels eine Überführung des Systems aus einem Ruhezustand, in dem sich das Flächengebilde, das Endelement und die Auszugsvorrichtung jeweils in einer Ruhestellung befinden, in ein Funktionszustand zu bewirken, in dem sich das Flächengebilde, das Endelement und die Auszugsvorrichtung jeweils in einer Funktionsstellung befinden.
Das Dokument DE 10 2008 006 157 A1 offenbart ein solches Schutz- oder Beschattungssystem. Gattungsgemäße Schutz- oder Beschattungssysteme sind aus dem Stand der Technik bekannt. Sie können in einem Kraftfahrzeug verschiedenen Zwecken dienen. Als Beschattungssysteme sind sie vorzugsweise im Bereich von Fenstern angeordnet und decken diese in ihrer Funktionsstellung so ab, dass der Einfall von Sonnenlicht vermindert wird. Als Schutzvorrichtungen können sie beispielsweise der Abtrennung eines Laderaumbereichs des Kraftfahrzeugs von einem Personenbereich dienen. So kann insbesondere mittels eines Trennnetzes als Flächengebilde verhindert werden, dass im Falle eines Unfalls Gepäckstücke in den Personenbereich des Fahrzeugs geschleudert werden.

Im Zusammenhang mit der vorliegenden Erfindung von besonderer Relevanz sind solche Schutzvorrichtungen, die als Windschott-Systeme ausgestaltet sind und die hinter den Sitzen eines Cabriolet-Kraftfahrzeugs angeordnet sind, um bei geöffnetem Verdeck den Einfluss des Fahrtwindes auf den Personenbereich des Fahrzeuges zu verringern.

Ein gattungsgemäßes System ist beispielsweise aus der US 6,763,874 B1 bekannt. Dieses weist zwei Auszugsvorrichtungen auf, die jeweils aus zwei aneinander und an der Basis bzw. einer Auszugsstange angelenkten Hebeln bestehen. Durch eine Bewegung des basisseitigen Hebels kann die Auszugsstange von der Basis beabstandet werden und dabei ein zuvor auf einer Wickelwelle aufgerolltes Flächengebilde abrollen. Allerdings werden die Hebel, die die Auszugsvorrichtung bilden, als unter ästhetischen Gesichtspunkten nachteilig angesehen. Zwar ist es aus dem Stand der Technik auch bekannt, bei Schutz- oder Beschattungssystemen statt einer Auszugsvorrichtung seitliche Führungsschienen zum Führen des Endelements zu verwenden, dies ist jedoch nicht in jeder Einbausituation und insbesondere nicht bei im Funktionszustand frei stehenden Windschottsystemen möglich.

Im Hinblick auf Windschottsysteme sind aus der DE 101 34 613 A1 sowie aus der DE 43 15 139 A1 Systeme bekannt, bei denen vorgesehen ist, dass das Endelement zur Überführung des Systems in den Funktionszustand manuell angehoben wird, wobei schwenkbare Seitensegmente im Ruhezustand das Endelement überdecken und im Funktionszustand die Position des verlagerten Endelements sichern. Weiterhin sind aus der DE 103 41 989 A1 und der DE 10 2005 029 692 A1 Windschott-Systeme bekannt, bei denen eine motorgetriebene Überführung in den Funktionszustand vorgesehen ist. Dabei werden beidseitig des Flächengebildes vorgesehene Hebelelemente verwendet, um das Endelement in Richtung der Funktionsstellung anzuheben.

### Aufgabe und Lösung

Aufgabe der Erfindung ist es, ein gattungsgemäßes Schutz- oder Beschattungssystem für ein Kraftfahrzeug dahingehend weiterzubilden, dass dieses insbesondere ästhetischen Ansprüchen genügt.

Erfindungsgemäß wird dies dadurch erzielt, dass eine an der Basis schwenkbar angelenkte Abdeckungsblende vorgesehen ist, die in eine erste Schwenkstellung verschwenkbar ist, in der sie an der Auszugsvorrichtung in deren Funktionsstellung anliegt oder diese zumindest teilweise umgibt.

Als Basis im Sinne dieser Erfindung wird ein Teil des Schutz- oder Beschattungssystems angesehen, welches vorzugsweise fahrzeugfest angeordnet ist. Diese Basis umfasst vorzugsweise einen Aufnahmeraum für das Flächengebilde in dessen Ruhestellung, insbesondere einen Aufnahmeraum, in dem eine Wickelwelle zur Aufnahme des Flächengebildes vorgesehen ist. Weiterhin umfasst sie vorzugsweise ein Antriebsmittel zur Betätigung der mindestens einen Auszugsvorrichtung, insbesondere einen hierfür vorgesehenen Elektromotor, gegebenenfalls mitsamt Getriebe, und Anlenkungs- oder Festlegungsabschnitte für die basisseitige Befestigung der Auszugsvorrichtung.

Bei der Auszugsvorrichtung handelt es sich um jene Elemente, die gegenüber der Basis und dem Endelement beweglich sind, um die durch ihre Bewegung die variable Beabstandung des Endelements von der Basis zu bewirken. Die Auszugsvorrichtung kann beispielsweise als Teleskopvorrichtung mit gegeneinander teleskopierbaren Gliedern ausgebildet sein. Als bevorzugt wird eine Auszugsvorrichtung angesehen, die an der Basis und/oder am Endelement schwenkbar angelenkte Hebel aufweist, die durch eine mittels des Antriebsmittels bewirkte Schwenkbewegung das Endelement gegenüber der Basis bewegen. Denkbare Gestaltungen mit derartigen Hebeln werden im Weiteren noch erläutert. Die Auszugsvorrichtung ist vorzugsweise derart angeordnet, dass die die Auszugsvorrichtung bildenden Elemente zumindest im Funktionszustand des Systems am Rand des Flächengebildes angeordnet sind, d.h. zumindest abschnittsweise nicht weiter als 30 mm von einer Seitenkante des Flächengebildes beabstandet sind. Im Funktionszustand wird das Flächengebilde dadurch nicht in unästhetischer Art in einem Zentralbereich durch die Auszugsvorrichtung überdeckt.

Im Weiteren wird jeweils auf nur auf eine Auszugsvorrichtung Bezug genommen. Es wird jedoch als vorteilhaft angesehen, wenn zwei Auszugsvorrichtungen vorgesehen sind, die vorzugsweise spiegelsymmetrisch ausgebildet sind und die weiterhin vorzugsweise im Funktionszustand jeweils im Randbereich des Flächengebildes angeordnet sind. Durch die Verwendung zweier Auszugsvorrichtungen kann erreicht werden, dass die durch die Auszugsvorrichtungen quer zur Auszugsrichtung auf das Flächengebilde und das Endelement wirkenden Kräfte sich gegenseitig kompensieren, so dass eine resultierende Kraftbeaufschlagung lediglich in Auszugsrichtung oder entgegen der Auszugsrichtung stattfindet. Jede Bezugnahme auf eine Auszugsvorrichtung im Rahmen der nachfolgenden Erläuterung ist als für beide Auszugsvorrichtungen geltend zu verstehen.

Das Endelement stellt eine zumindest weitgehend starren Abschluss des Flächengebildes dar und dient der Führung und gleichmäßigen Kraftbeaufschlagung des Flächenelements bei der Überführung aus der Ruhestellung in die Funktionsstellung und umgekehrt. Das Flächengebilde selbst ist vorzugsweise in der Ruhestellung auf einer Rollowelle aufgewickelt, die durch eine Wickelfeder in einer Aufwickelrichtung um Enden beaufschlagt ist.

Erfindungsgemäß ist an der Basis eine Abdeckungsblende vorgesehen, die gegenüber der Basis verschwenkbar ist. Im Falle eines Systems mit zwei Auszugsvorrichtungen sind vorzugsweise zwei Abdeckungsblenden vorgesehen. Die Abdeckungsblende ist derart angeordnet, dass sie in ihrer ersten Schwenkstellung an der Auszugsvorrichtung in deren Funktionsstellung anliegt oder diese zumindest teilweise umgibt. Die Abdeckungsblende kann dadurch ästhetisch nachteilige Teile der Auszugsvorrichtung überdecken und den ästhetischen Eindruck des Schutz- oder Beschattungssystems im Funktionszustand verbessern. Im einfachsten Fall versteckt die Abdeckungsblende die Auszugsvorrichtung nur im Hinblick auf eine bestimmte Blickrichtung, beispielsweise im Hinblick auf die Blickrichtung der im Fahrzeug sitzenden Personen. Als vorteilhaft wird es jedoch angesehen, wenn die Abdeckungsblende die Auszugsvorrichtung umgibt, so dass die Auszugsvorrichtung in ihrer Funktionsstellung zumindest abschnittsweise in einer Kavität der Abdeckungsblende angeordnet ist. Ganz besonders vorteilhaft ist eine Gestaltung, bei der die Abdeckungsblende nicht nur die Auszugsvorrichtung zumindest teilweise umgibt, sondern mittels zweier Blendenabschnitte auf gegenüberliegenden Seiten des Flächengebildes die Seitenkante des Flächengebildes umgibt. Bei einer solchen Gestaltung übernimmt die Abdeckungsblende neben ihrer ästhetischen Aufgabe auch eine Fixierungsaufgabe, indem sie das Flächengebilde daran hindert, beispielsweise durch Fahrtwind aus dessen Sollposition in der Funktionsstellung ausgelenkt zu werden.

Die Abdeckungsblende ist schwenkbar an der Basis angelenkt, vorzugsweise um eine von Schwenkachsen der Auszugsvorrichtung beabstandete Schwenkachse. Sie erstreckt sich in ihrer ersten Schwenkstellung vorzugsweise bis zum Endelement in dessen Funktionsstellung, wobei dies auch noch eine Beabstandung von weniger als 20 mm umfasst. Bei einer solchen Erstreckung der Abdeckungsblende kann die Auszugsvorrichtung vollständig oder nahezu vollständig durch die Abdeckungsblende versteckt werden. Die Abdeckungsblende ist vorzugsweise länglich ausgebildet und in ihrer ersten Schwenkstellung derart ausgerichtet, dass ihre Haupterstreckungsachse, die von der Schwenkachse der Abdeckungsblende bis zu ihrem distalen Ende reicht, zumindest im Wesentlichen (± 5°) mit der Seitenkante des Flächengebildes in dessen Funktionsstellung fluchtet. Die Schwenkachse der Abdeckungsblende ist vorzugsweise orthogonal zur Ebene des Flächengebildes in dessen Funktionsstellung ausgerichtet, so dass die Abdeckungsblende in einer zum Flächengebilde parallelen Ebene schwenkbeweglich ist.

Als besonders vorteilhaft wird es angesehen, wenn die Auszugsvorrichtung zwei Hebelglieder aufweist, wobei ein erstes Hebelglied schwenkbar an der Basis angelenkt ist und wobei ein zweites Hebelglied schwenkbar am ersten Hebelglied sowie schwenkbar am Endelement angelenkt ist. Eine solche Ausgestaltung der Auszugsvorrichtung hat sich als besonders zuverlässig erwiesen. Allerdings ist insbesondere bei einer solchen Auszugsvorrichtung die Anlenkung der Hebelglieder aneinander ästhetisch nachteilig, so dass die Verwendung einer erfindungsgemäßen Abdeckungsblende von besonderem Vorteil ist. Die Hebelglieder sind vorzugsweise derart ausgebildet und am Endelement bzw. an der Basis angelenkt, dass sie in einer gestreckten Stellung, in der sie in etwa miteinander fluchten, in etwa parallel zur Seitenkante des Flächengebildes ausgerichtet sind. Die Schwenkachsen der Hebelglieder sind bei dieser Weiterbildung vorzugsweise ausnahmslos orthogonal zur Ebene des Flächengebildes in dessen Funktionsstellung ausgerichtet.

Eine besonders vorteilhafte Gestaltung mit einer Auszugsvorrichtung mit zwei Hebelgliedern sieht vor, dass eines der Hebelglieder, insbesondere das an der Basis angelenkte Hebelglied, in der Funktionsstellung der Auszugsvorrichtung das andere Hebelglied zumindest zum überwiegenden Teil überdeckt.

Bei einer besonders vorteilhaften Gestaltung der Erfindung ist vorgesehen, dass die Abdeckungsblende in eine zweite Schwenkstellung verschwenkbar ist, in der sie das Endelement in dessen Ruhestellung zumindest teilweise in Auszugsrichtung überdeckt, mit einem Mittelabschnitt des Endelement fluchtend ausgerichtet ist und/oder eine für das Flächengebilde vorgesehene Auszugsöffnung an der Basis zumindest teilweise abdeckt. Diese zweite Schwenkstellung der Abdeckungsblende ist dem Ruhezustand des Systems zugeordnet. Sie ist so geartet, dass die Haupterstreckungsrichtung der Abdeckungsblende in dieser zweiten Schwenkstellung in etwa orthogonal zur Auszugsrichtung verläuft. Vorzugsweise ist vorgesehen, dass eine distale Stirnkante des Flächengebildes und/oder das Endelement am distalen Ende des Flächengebildes durch die Abdeckungsblende in ihrer zweiten Schwenkstellung zumindest zum Teil überdeckt werden, wobei insbesondere vorzugsweise nur ein Mittelabschnitt des Endelements von der Abdeckungsblende oder den Abdeckungsblenden in dessen Ruhestellung nicht überdeckt wird. Besonders von Vorteil ist diese zweite Schwenkstellung bei einem System mit einem sich zum distalen Ende hin verjüngenden Flächengebilde, da in einem solchen Fall das Endelement schmaler ausgebildet ist als die Auszugsöffnung an der Basis. Die Abdeckungsblende bzw. die Abdeckungsblenden können die durch das Endelement nicht verschlossenen Randbereiche der Auszugsöffnung überdecken, so dass die Auszugsöffnung im Ruhezustand des Systems weitgehend vollständig verschlossen ist.

Es wird als vorteilhaft angesehen, wenn das Endelement einen sich seitlich an den Mittelabschnitt anschließenden verjüngten Seitenabschnitt aufweist, wobei die Abdeckungsblende in der zweiten Schwenkstellung vorzugsweise nur den verjüngten Seitenabschnitt überdeckt. Dabei ist zwischen dem Mittelabschnitt und dem Seitenabschnitt vorzugsweise eine Stufe vorgesehen, so dass die Abdeckungsblende in der zweiten Schwenkstellung die visuelle Anmutung hinterlässt, mit dem Mittelabschnitt zu fluchten. Besonders von Vorteil ist es, wenn der Seitenabschnitt abgeknickt oder gekrümmt ausgebildet ist, so dass ein außenseitiges Ende des Seitenabschnitts mit der Seitenkante des Flächengebildes fluchtet. Hierdurch wird erreicht, dass dieses Ende im Funktionszustand des Systems mit der Auszugsvorrichtung und/oder der Abdeckungsblende fluchtet und dadurch die Anmutung eines einheitlichen Rahmens um das Flächengebilde herum hinterlässt.

Als bevorzugt wird es weiterhin angesehen, wenn die Auszugsvorrichtung und die Abdeckungsblende miteinander mechanisch gekoppelt sind oder mit einem gemeinsamen Steuerglied mechanisch gekoppelt sind, so dass über ein gemeinsames Antriebsmittel, insbesondere über einen Elektromotor des Systems, sowohl eine Bewegung des Flächengebildes in Auszugsrichtung als auch eine Schwenkbewegung der Abdeckungsblende bewirkt werden kann. Somit reicht ein gemeinsames Antriebsmittel aus, um die Auszugsvorrichtung und die Abdeckungsblende zu bewegen. Gegenüber einer Lösung mit zwei getrennten Antriebsmitteln besteht darüber hinaus der Vorteil, dass bereits durch die mechanische Wirkkopplung die Abstimmung der Bewegungen aufeinander vorgegeben ist.

Als besonders bevorzugt wird es angesehen, wenn die mechanische Wirkkopplung derart ausgebildet ist, dass bei der durch das gemeinsame Antriebsmittel bewirkten Überführung des Systems aus dem Ruhezustand in den Funktionszustand die Bewegung des Endabschnitts erst nach Beginn der Schwenkbewegung der Abdeckungsblende einsetzt. Durch eine derartige mechanische Kopplung wird erreicht, dass die Abdeckungsblende bereits einen Teil ihres Weges zwischen der zweiten und der ersten Schwenkstellung zurückgelegt hat, wenn die Überführung des Endelements in seine Funktionsstellung beginnt. Hierdurch werden eine Kollision und/oder Schleifgeräusche zwischen der Abdeckungsblende und dem Endelement vermieden. Konstruktiv wird dies vorzugsweise dadurch erreicht, dass die Auszugsvorrichtung an das Steuerglied über ein Langloch mit hineinragendem Bolzen gekoppelt ist.

Weiterhin wird es als vorteilhaft angesehen, wenn die Abdeckungsblende derart an das gemeinsame Antriebsmittel mechanisch gekoppelt ist, dass die Abdeckungsblende bei der Überführung aus der zweiten Schwenkstellung in die erste Schwenkstellung zunächst über die erste Schwenkstellung hinaus bewegt wird und anschließend zurück in die erste Schwenkstellung bewegt wird. Dabei ist die mechanische Kopplung derart ausgebildet, dass eine einheitliche Antriebsrichtung des Antriebsmittels in zwei sich aneinander anschließenden Phasen zur gegenläufigen Bewegung der Abdeckungsblende führt. Durch die Bewegung der Abdeckungsblende über die erste Schwenkstellung hinaus kann erreicht werden, dass zunächst die Auszugsvorrichtung ihre Funktionsstellung zumindest annähernd erreicht, bevor die Abdeckungsblende in ihre erste Schwenkstellung zurückkehrt.

Bei einer bevorzugten Gestaltung ist ein Federmittel vorgesehen, welches derart angeordnet und/oder ausgebildet ist, dass die Abdeckungsblende in der zweiten Schwenkstellung in Richtung der ersten Schwenkstellung momentenbeaufschlagt wird. Hierdurch wird eine besonders einfache mechanische Koppelung der Abdeckungsblende an das Antriebsmittel möglich, da diese mechanische Kopplung lediglich dafür ausgebildet sein muss, die Abdeckungsblende entgegen der Federkraft zu beaufschlagen, um eine Überführung aus der ersten Schwenkstellung in die zweite Schwenkstellung zu bewirken. Eine Momentenbeaufschlagung in entgegengesetzte Richtung wird zumindest phasenweise alleine durch das Federmittel bewirkt.

Bei einer besonders bevorzugten Ausgestaltung sind die Auszugsvorrichtung und die Abdeckungsblende für ein Zusammenwirken dergestalt ausgebildet, dass diese gemeinsam in der Funktionsstellung der Auszugsvorrichtung und der ersten Schwenkstellung der Abdeckungsblende eine Festlegungswirkung auf das Flächengebilde bewirken.

Die Auszugsvorrichtung, deren Bestandteile zumindest zum Teil während der Überführung aus der Ruhestellung in die Funktionsstellung gegenüber dem Flächengebilde relativ bewegt werden, wirkt gemäß dieser Weiterbildung derart mit der Abdeckungsblende in deren erster Schwenkstellung zusammen, dass eine Festlegungswirkung erzielt wird. Diese Festlegungswirkung kann insbesondere darin bestehen, dass eine Seitenkante des Flächengebildes festgeklemmt wird. Dies kann einerseits dadurch erreicht werden, dass Teilkomponenten der Auszugsvorrichtung, die auf gegenüberliegenden Seiten des Flächengebildes angebracht sind, durch die Abdeckungsblende in deren erster Schwenkstellung aufeinander zu gedrückt werden und dadurch das Flächengebilde festklemmen. Alternativ ist es auch möglich, dass das Flächengebilde zwischen der Abdeckungsblende einerseits und der Auszugsvorrichtung andererseits eingeklemmt wird.

### Kurzbeschreibung der Zeichnungen

Weitere Aspekte und Merkmale der Erfindung ergeben sich außer aus den Ansprüchen auch aus der nachfolgenden Beschreibung eines bevorzugten Ausführungsbeispiels der Erfindung, das nachfolgend anhand der Figuren erläutert wird. Dabei zeigen:
- Fig. 1a und 1b ein: erfindungsgemäßes Schutz- bzw. Beschattungs- system in einem Funktionszustand und in einem Ru- hezustand,
- Fig. 2a bis 2d: die Mechanik des erfindungsgemäßen Systems beim Übergang vom Ruhezustand in den Funktionszustand und
- Fig. 3a und 3b: das Zusammenwirken zwischen einer Auszugsvorrich- tung und einer Abdeckungsblende des Systems ge- mäß den Fig. 1 a und 1 b im Funktionszustand.

### Detaillierte Beschreibung der Ausführungsbeispiele

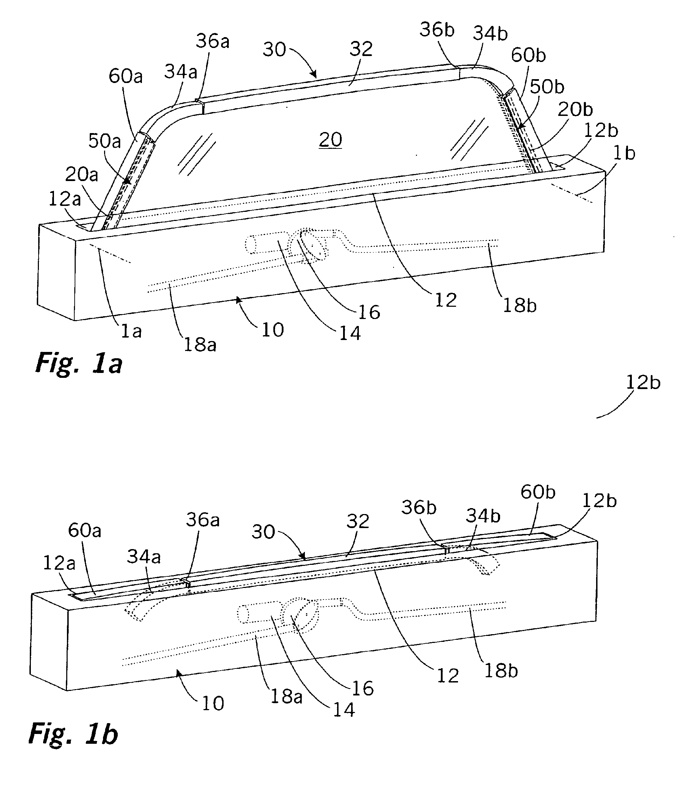

Die Fig. 1a und 1b zeigen ein erfindungsgemäßes Schutz- bzw. Beschattungssystem. Dabei kann es sich vorliegend insbesondere um ein Windschottsystem für ein Cabriolet-Fahrzeug handeln, welches in einem Bereich hinter den Sitzen des Fahrzeugs angeordnet wird, um im Funktionszustand der Fig. 1 a Luftverwirbelungen im Personenbereich des Fahrzeugs zu vermindern.

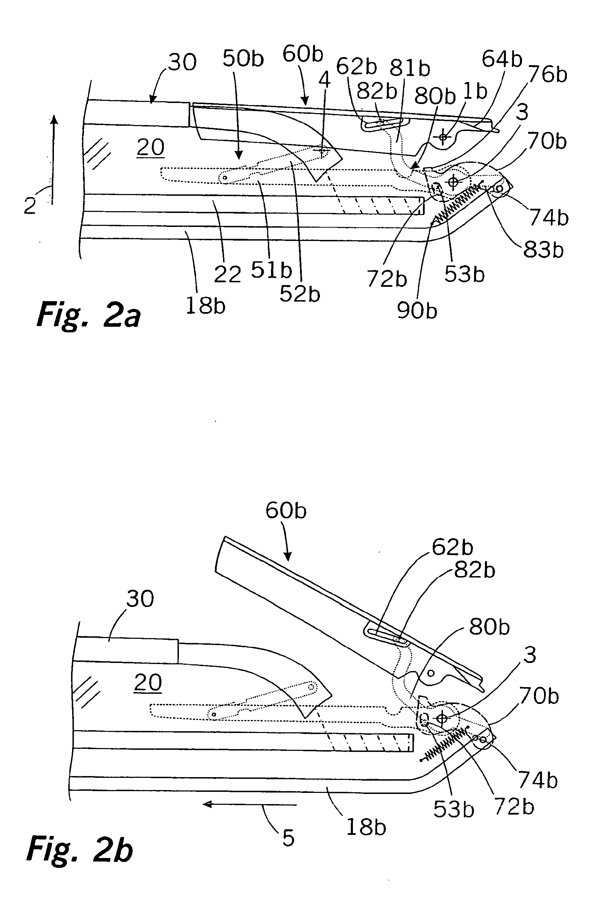

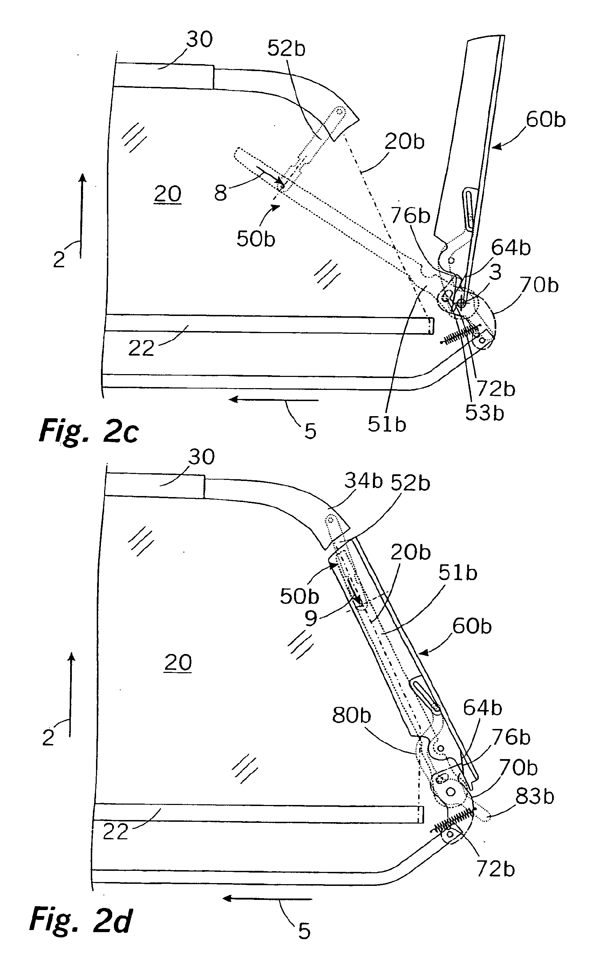

Das System weist eine Basis 10 auf, die in einem Fahrzeug ortsfest anzuordnen ist. An der Oberseite dieser Basis 10 ist ein Austrittsschlitz 12 vorgesehen, durch den hindurch ein Flächengebilde 20, beispielsweise ein textiles Flächengebilde oder ein Netz, an dessen distalem Stirnende ein Endelement 30 angebracht ist, aus der Basis 10 herausgezogen werden kann. Innerhalb der Basis 10 ist eine in Fig. 1 a und 1 b nicht dargestellte Wickelwelle 22 angeordnet, die zur Aufnahme des Flächengebildes 20 im Ruhezustand der Fig. 1b vorgesehen ist. Die zur Verlagerung des Flächengebildes 20 und des Endelements 30 aus der Ruhestellung der Fig. 1b in die Funktionsstellung der Fig. 1a erforderliche mechanische Energie wird durch einen Elektromotor 14 zur Verfügung gestellt, der über ein nicht näher dargestelltes Getriebe 16 auf zwei Steuerstangen 18a, 18b wirkt. Diese Steuerstangen 18a, 18b sind in nachfolgend anhand der Fig. 2a und 2d in ausführlich erläuterter Weise mit in der Fig. 1a gestrichelt dargestellten Auszugsvorrichtungen 50a, 50b wirkverbunden, die einerseits an der Basis 10 und andererseits am Endelement 30 angelenkt sind.

Da diese Auszugsvorrichtungen 50a, 50b als ästhetisch nachteilig angesehen werden, sind U-förmige Abdeckungsprofile 60a, 60b vorgesehen, die im Funktionszustand der Fig. 1 a von außen über die in diesem Funktionszustand am Seitenrand 20a, 20b des Flächengebildes angeordneten Auszugsvorrichtungen 50a, 50b hinüberragen und diese dadurch verblenden.

Die Abdeckungsprofile 60a, 60b, die um Schwenkachsen 1 a, 1b verschwenkbar sind, weisen dabei eine ausreichende Länge in ihrer Haupterstreckungsrichtung auf, um im Funktionszustand der Fig. 1a annähernd bis an das Endelement 30 heranzureichen. Die Auszugsvorrichtungen 50a, 50b sind im Funktionszustand daher vollständig oder nahezu vollständig überdeckt.

Das Endelement 30 selbst weist einen Mittelabschnitt 32 sowie sich daran seitlich anschließende Seitenabschnitte 34a, 34b auf. Der Querschnitt des Endelements entspricht im Bereich des Mittelabschnitts 32 sowie an den äußeren bogenförmig nach unten gezogenen Enden der Seitenabschnitte 34a, 34b in etwa dem Außenquerschnitt der Abdeckungsprofile 60a, 60b. Die Seitenabschnitte 34a, 34b verjüngen sich von außen nach innen, so dass zwischen den äußeren Enden des Mittelabschnitts 32 und den inneren Ende der Seitenabschnitte 34a, 34b eine Stufe 36a, 36b vorgesehen ist.

Durch die übereinstimmenden Außenquerschnitte der Abdeckungsprofile 60a, 60b und der äußeren Ende der Seitenabschnitte 34a, 34b ergibt sich im Funktionszustand der Fig. 1a eine besonders ästhetische Anmutung, da kein Querschnittssprung zwischen den distalen Enden der Abdeckungsprofile 60a, 60b und den äußeren Enden der Seitenabschnitte 34a, 34b des Endelements 30 vorliegt.

Im Ruhezustand der Fig. 1b sind das Flächengebilde 20 und das Endelement 30 weitgehend vollständig in der Basis 10 aufgenommen. Die Abdeckungsprofile 60a, 60b sind in diesem Ruhezustand derart verschwenkt, dass sie in etwa mit dem Mittelabschnitt 32 des Endelements 30 fluchten. Dabei überdecken die Abdeckungsprofile 60a, 60b die Seitenabschnitte 34a, 34b des Endelements 30. Dies ist aufgrund der zumindest im horizontalen Teilbereich der Seitenabschnitte 34a, 34b gegenüber dem Mittelabschnitt 32 verjüngten Gestaltung möglich. Die Lage der Abdeckungsprofile 60a, 60b im Ruhezustand der Fig. 1b führt zu einer ästhetisch vorteilhaften Abdeckung von seitlichen Teilbereichen 12a, 12b des Austrittsschlitzes 12, die aufgrund der gegenüber der Breite des Austrittsschlitzes 12 geringeren Breite des Endelements 30 von diesem nicht verschlossen werden. Aufgrund der bereits genannten übereinstimmenden Außenquerschnitte des Mittelabschnitts 32 und der Abdeckungsprofile 60a, 60b ergibt sich auch in diesem Ruhezustand eine besonders ästhetische Anmutung.

Die Fig. 2a bis 2d zeigen in einer schematischen Ansicht die Überführung des Systems aus dem Ruhezustand der Fig. 1b in den Funktionszustand der Fig. 1a.

Anhand der Fig. 2a sollen zunächst die Elemente erläutert werden, die zur mechanischen Kopplung des Motors 14 mit dem Endelement 30 einerseits und den Abdeckungsprofilen 60a, 60b andererseits verwendet werden. Die Darstellung der Fig. 2a bis 2d zeigen dabei jeweils nur die der Auszugsvorrichtung 50b und dem Abdeckungsprofile 60b zugeordnete rechte Seite der Mechanik. Die gegenüberliegende linke Seite ist jedoch bis auf nicht weiterer relevanter Aspekte im Hinblick auf die Bewegung der Steuerstangen 18a, 18b identisch.

Wie bereits erwähnt, ist das distale Ende des Flächengebildes 20 am Endelement 30 befestigt. Das gegenüberliegende Ende des Flächenelements 20 ist in der Ruhestellung der Fig. 2a auf der Wickelwelle 22 aufgerollt, die in Aufwickelrichtung durch eine nicht dargestellte Wickelfeder in Aufwickelrichtung momentenbeaufschlagt ist.

Die Steuerstange 18b, die in der in Fig. 1a dargestellten Art und Weise über ein Getriebe 16 mit dem Motor 14 verbunden ist, ist an ihrem gegenüberliegenden Ende schwenkbar an einem langgestrichelt dargestellten Steuerglied 70b angelenkt. Dieses Steuerglied 70b ist um eine basisfeste Schwenkachse 3 schwenkbar ausgebildet. Die bereits erwähnte Auszugsvorrichtung 50b weist einen ersten kurzgestrichelt dargestellten Hebel 51 b auf, der ebenfalls um diese basisfeste Schwenkachse 3 verschwenkbar an der Basis angelenkt ist. An diesem ersten Hebel 51 b ist schwenkbar ein gepunktet dargestellter zweiter Hebel 52b angelenkt, dessen gegenüberliegendes Ende um eine endelementseitige Schwenkachse 4 schwenkbar am Endelement 30 angelenkt ist. Ein Verschwenken des ersten Hebels 51 b um die Achse 3 führt daher in nachfolgend noch detaillierter erläuterter Weise zu einer Bewegung des Endelements 30 in Auszugsrichtung 2.

Obwohl sowohl das Steuerglied 70b als auch der erste Hebel 51 b der Auszugsvorrichtung 50b um die Achse 3 schwenkbar gelagert sind, bewegen sie sich nicht jederzeit gemeinsam miteinander. Die Koppelung zwischen dem Steuerglied 70b und dem Hebel 51 b ist über ein Langloch 72b am Steuerglied 70b sowie einen Bolzen 53b am ersten Hebel 51 b realisiert. Durch dieses Langloch 72b ist eine begrenzte Drehbeweglichkeit des Steuergliedes 70b um die Achse 3 im Uhrzeigersinn möglich, ohne dass dies bereits zu einer Schwenkbewegung des ersten Hebels 51 b führt. Auch dies wird nachfolgend noch im Detail erläutert.

Das Abdeckungsprofil 60b ist um eine von der Achse 3 beabstandete, jedoch ebenfalls basisfeste Schwenkachse 1 b schwenkbar an der Basis gelagert. Die Koppelung des Auszugprofils 60b an das Steuerglied 70b erfolgt primär über einen gepunktet dargestellten Zwischenhebel 80b, der ebenfalls um die Schwenkachse 3 schwenkbar an der Basis gelagert ist. Dieser Zwischenhebel 80b weist einen ersten Hebelabschnitt 81 b auf, an dessen Ende ein Zapfen 82b vorgesehen ist, der in einer am Abdeckungsprofil 60b vorgesehenen Langlochkulisse 62b aufgenommen ist. Gegenüberliegend zum Hebelabschnitt 81 b weist der Zwischenhebel 80b einen weiteren Hebelabschnitt 83b auf, der sich von der Schwenkachse 3 radial nach außen erstreckt. Dieser zweite Hebelabschnitt 83b ist einerseits Anlenkpunkt eines Federmittels in Form einer Zugschraubenfeder 90b, deren erstes Ende ortsfest an der Basis befestigt ist und deren zweites Ende ortsfest am genannten Hebelabschnitt 83b befestigt ist, und dient andererseits dem Zusammenwirken mit dem Steuerglied 70b. Zum Zwecke dieses Zusammenwirkens ist am Steuerglied 70b ein Zapfen 74b vorgesehen, der in der Ruhestellung der Fig. 2a am Hebelabschnitt 83b des Zwischenhebels 80b anliegt.

Ausgehend vom Ruhezustand der Fig. 2a erfolgt eine Überführung in den Funktionszustand dadurch, dass der Elektromotor 14 bestromt wird. Dies führt dazu, dass die Steuerstange 18b in Richtung des Pfeils 5 in etwa nach links verlagert wird. Durch die Anlenkung der Steuerstange 18b kommt es zu einer Schwenkbewegung des Steuergliedes 70b um die Achse 3 im Uhrzeigersinn. Diese Drehbewegung des Steuergliedes 70b hat zunächst keinerlei Auswirkungen auf die Auszugsvorrichtung 50b, da es zunächst bis zum Zustand der Fig. 2b lediglich zu einer Verlagerung des Langlochs 72b kommt, ohne dass der Bolzen 53b innerhalb des Langlochs 72b hierdurch bereits eine Kraftbeaufschlagung erfährt. Allerdings führt bereits diese erste Bewegungsphase des Steuergliedes 70b aufgrund des mit dem Steuerglied 70b um die Achse 3 in Richtung des Uhrzeigersinns verschwenkenden Bolzens 74b sowie aufgrund der Federkraft der Feder 90b, die auf den Zwischenhebel 80b wirkt, zu einem Verschwenken des Zwischenhebels 80b um die Achse 3 im Uhrzeigersinn. Dies führt zu einem Verschwenken des Abdeckungsprofils 60b um die Achse 1b im Uhrzeigersinn, da zwischen dem Zwischenhebel 80b und dem Abdeckungsprofil 60b über den Bolzen 82b und das Langloch 62b eine Zwangskopplung besteht.

Demnach werden während dieser ersten Bewegungsphase zwischen dem Ruhezustand der Fig. 2a und dem ersten Zwischenzustand der Fig. 2b lediglich die Abdeckungsprofile 60a, 60b verschwenkt, so dass eine Lage geschaffen wird, aus der heraus die Bewegung des Endelements 30 und des Flächengebildes 20 beginnen kann.

Bei einer fortgesetzten Bewegung der Steuerstange 18b nach links in Richtung des Pfeils 5 wird auch das Steuerglied 70b weiter um die Schwenkachse 3 verschwenkt. In gleicher Art und Weise wie dies zum Übergang zwischen den Fig. 2a und 2b beschrieben ist, führt diese fortgesetzte Schwenkbewegung des Steuerglieds 70b zu einem ebenfalls fortgesetzten Verschwenken des Abdeckungsprofils 60b bis in die in Fig. 2c dargestellte Position. Gleichzeitig schwenkt jedoch auch das erste Hebelglied 51 b der Auszugsvorrichtung 50b in gleichem Maße um die Schwenkachse 3 wie das Steuerglied 70b, da der Bolzen 53b ab dem Zwischenzustand der Fig. 2b am Ende des Langlochs 72b anliegt. Dieses Verschwenken des ersten Hebels 51 b sowie des nicht dargestellten gegenüberliegenden korrespondierenden ersten Hebels 51a bewirkt über die zweiten Hebel 52a, 52b eine Bewegung des Endelements 30 in Richtung der Auszugsrichtung 2 und gleichzeitig ein Abziehen des Flächengebildes 20 von der Wickelwelle 22. Der Zwischenzustand der Fig. 2c ist erreicht, sobald eine Kontaktnase 76b des Steuergliedes 70b in Berührkontakt mit einer korrespondierenden Kontaktfläche 64b des Abdeckungsprofils 60b gelangt.

Ab diesem in Fig. 2c dargestellten Zwischenzustand führt eine durch die Steuerstange 18b bewirkte weitere Schwenkbewegung des Steuergliedes 70b um die Schwenkachse 3 im Uhrzeigersinn dazu, dass diese Kontaktnase 76b auf der Kontaktfläche 64b des Abdeckungsprofils 60b entlanggleitet und dieses dabei um die Schwenkachse 4 gegen den Uhrzeigersinn, also wieder in Richtung der Ausgangsschwenkposition der Fig. 2a momentenbeaufschlagt. Dies geht damit einher, dass der Fortsatz 83b des Zwischenhebels 80b den Kontakt zum Bolzen 74b des Zwischengliedes 70b verliert.

Die vom zweiten Zwischenzustand der Fig. 2c fortgeführte Schwenkbewegung des Steuergliedes 80b führt demnach zum einen zu einem fortgesetzten Ausziehen des Flächengebildes 20 und des Endelements 30 in Richtung der Auszugsrichtung 2 sowie zum anderen zu einem Zurückschwenken des Abdeckungsprofils 60b entgegen dem Uhrzeigersinn gegen die Kraft der Feder 90b.

Die Endlage der Fig. 2d ist erreicht, wenn die Hebel 51 b, 52b der Auszugsvorrichtung 50b sich in einer gestreckten Ausrichtung befinden, also in etwa miteinander fluchten. Wenn dieser Funktionszustand der Auszugsvorrichtung 50b erreicht ist, befinden sich auch das Endelement 30 sowie das Flächengebilde 20 in ihrer jeweiligen Funktionsstellung. In diesem Funktionszustand des Systems, der in Fig. 2d dargestellte ist, ist auch das Abdeckungsprofil 60b soweit zurück entgegen dem Uhrzeigersinn verschwenkt, dass es gemeinsam mit der Seitenkante 20b des Flächengebildes sowie den Hebeln 51 b, 52b fluchtend mit dem äußeren Ende des Seitenabschnitts 34b des Endelements 30 ausgerichtet ist. Wie sich auch aus der Darstellung der Fig. 1 a ergibt, verdeckt das Abdeckungsprofil 60b in diesem Zustand die Hebel 51 b, 52b, so dass ein ästhetischer Gesamteindruck erzielt wird.

Sowohl im Ausgangszustand der Fig. 2a als auch im Funktionszustand der Fig. 2d wird eine manuelles Verschwenken des Abdeckungsprofils nach oben bzw. außen verhindert, um Missbrauch zu verhindern. Im Ausgangszustand der Fig. 2a wird dies durch die Zwangskoppelung des Abdeckungsprofils 60b mit dem Zwischenhebel 80b und durch das Anliegen des Fortsatzes 83b des Zwischenhebels 80b am Zapfen 74b des Steuergliedes 70b erreicht. Im Funktionszustand der Fig. 2d wird es durch das Anliegen des Abdeckungsprofils 60b an der Kontaktnase 76b des Steuergliedes 70b erreicht. In beiden Zuständen begrenzt die Stellung des Steuergliedes 70b somit die Schwenkbeweglichkeit des Abdeckungsprofils 60b nach oben bzw. außen.

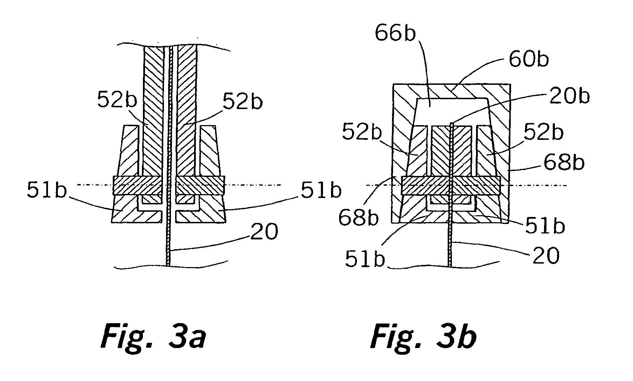

Die Fig. 3a, 3b verdeutlichen das Zusammenwirken der Auszugsvorrichtung 50b und des Abdeckungsprofils 60b im Funktionszustand der Fig. 1a und 2d.

Hierzu ist zunächst in der Fig. 3a eine schematische geschnittene Ansicht der Hebel 51 b, 52b in der Position der Fig. 2c in Blickrichtung des Pfeils 8 dargestellt. Dabei ist ersichtlich, dass sowohl der Hebel 51 b als auch der Hebel 52b jeweils beidseitig des Flächengebildes 20 spiegelbildlich zueinander identisch ausgebildete Abschnitte aufweisen, die voneinander zunächst derart beabstandet sind, dass eine Relativbewegung der Hebel 51 b, 52b gegenüber dem Flächengebilde 20 ungehindert möglich ist.

Die Darstellung der Fig. 3b bezieht sich auf den Funktionszustand der Fig. 1 a und 2d und zeigt eine Blickrichtung in Richtung des Pfeils 9. In diesem Funktionszustand ist die Auszugsvorrichtung 50b mit den Hebeln 51 b, 52b innerhalb der durch Seiteabschnitte 68b gebildeten Kavität 66b des Abdeckungsprofils 60b angeordnet. Durch den keilförmigen Querschnitt der beidseitigen Abschnitte des Hebels 51 b sowie der Seitenabschnitte 68b des Abdeckungsprofils 60b sind in diesem Zustand die sich spiegelbildlich gegenüberliegenden Abschnitte der Hebel 51 b, 52b der Auszugsvorrichtung 50b aneinander gedrückt, so dass das zwischen ihnen liegende Flächengebilde 20 eingeklemmt ist.

Im Zustand der Fig. 3b sind somit die Seitenränder 20a, 20b des Flächengebildes 20 ausreichend fixiert, dass sie auch bei einer beispielsweise starken Windkraft, die auf das Flächengebilde 20 wirkt, nicht aus dem Bereich der Auszugsvorrichtungen 50a, 50b entweichen können.

## Patentansprüche

1. Schutz- oder Beschattungssystem für ein Kraftfahrzeug, insbesondere Windschott-System für ein Cabrio-Fahrzeug, mit
- einer Basis (10),
- einem zwischen einer Ruhestellung und einer Funktionsstellung von der Basis (10) weg in einer Ausziehrichtung (2) ausziehbaren Flächengebilde (20),
- einem am Flächengebilde (20) befestigten starren Endelement (30), das bezogen auf die Basis (10) am distalen Ende des Flächengebildes (20) vorgesehen ist, und
- mindestens einer einerseits an der Basis (10) und andererseits am Endelement (30) befestigten Auszugsvorrichtung (50a, 50b),
wobei die Auszugsvorrichtung (50a, 50b) dafür ausgebildet ist, durch eine mechanische Beaufschlagung mittels eines Antriebsmittels (14) eine Überführung des Systems aus einem Ruhezustand, in dem sich das Flächengebilde (20), das Endelelement (30) und die Auszugsvorrichtung (50a, 50b) jeweils in einer Ruhestellung befinden, in einen Funktionszustand zu bewirken, in dem sich das Flächengebilde (20), das Endelement (30) und die Auszugsvorrichtung (50a, 50b) jeweils in einer Funktionsstellung befinden,
**gekennzeichnet durch**
eine an der Basis angelenkte Abdeckungsblende (60a, 60b), die in eine erste Schwenkstellung verschwenkbar ist, in der sie an der Auszugsvorrichtung (50a, 50b) in deren Funktionsstellung anliegt oder dieses zumindest teilweise umgibt.

2. Schutz- oder Beschattungssystem nach Anspruch 1,
**dadurch gekennzeichnet, dass**
die Abdeckungsblende (60a, 60b) in ihrer ersten Schwenkstellung jeweils einen Blendenabschnitt (68b) beidseitig des Flächengebildes (20) aufweist.

3. Schutz- oder Beschattungssystem nach Anspruch 1 oder 2,
**dadurch gekennzeichnet, dass**
die Auszugsvorrichtung (50a, 50b) zwei Hebelglieder (51b, 52b) aufweist, wobei ein erstes Hebelglied (51b) schwenkbar an der Basis (10) angelenkt ist und wobei ein zweites Hebelglied (52b) schwenkbar am ersten Hebelglied (51b) sowie schwenkbar am Endelement (30) angelenkt ist.

4. Schutz- oder Beschattungssystem nach einem der vorstehenden Ansprüche,
**dadurch gekennzeichnet, dass**
die Abdeckungsblende (60a, 60b) in eine zweite Schwenkstellung verschwenkbar ist, in der sie
- das Endelement (30) in dessen Ruhestellung zumindest teilweise in Auszugsrichtung (2) überdeckt,
- mit einem Mittelabschnitt (32) des Endelements (30) fluchtend ausgerichtet ist und/oder
- eine für das Flächengebilde (20) vorgesehene Auszugsöffnung (12) an der Basis (10) zumindest teilweise abdeckt.

5. Schutz- oder Beschattungssystem nach Anspruch 4,
**dadurch gekennzeichnet, dass**
das Endelement (30) einen sich seitlich an den Mittelabschnitt (32) anschließenden verjüngten Seitenabschnitt (34a, 34b) aufweist, wobei die Abdeckungsblende (60a, 60b) in der zweiten Schwenkstellung vorzugsweise nur den verjüngten Seitenabschnitt (34a, 34b) abdeckt.

6. Schutz- oder Beschattungssystem nach einem der vorstehenden Ansprüche,
**dadurch gekennzeichnet, dass**
die Auszugsvorrichtung (50a, 50b) und die Abdeckungsblende (60a, 60b)
- miteinander mechanisch gekoppelt sind oder
- mit einem gemeinsamen Steuerglied (70b) mechanisch gekoppelt sind,
so dass über ein gemeinsames Antriebsmittel (14), insbesondere über einen Elektromotor (14) des System, sowohl eine Bewegung des Flächengebildes (20) in Auszugsrichtung (2) als auch eine Schwenkbewegung der Abdeckungsblende (60a, 60b) in die erste Schwenkstellung bewirkbar ist.

7. Schutz- oder Beschattungssystem nach Anspruch 6,
**dadurch gekennzeichnet, dass**
die mechanische Kopplung derart ausgebildet ist, dass bei der durch das gemeinsame Antriebsmittel (14) bewirkten Überführung des Systems aus dem Ruhezustand in den Funktionszustand die Bewegung des Endabschnitts (30) erst nach Beginn der Schwenkbewegung der Abdeckungsblende (60a, 60b) einsetzt.

8. Schutz- oder Beschattungssystem nach Anspruch 6 oder 7,
**dadurch gekennzeichnet, dass**
die Abdeckungsblende (60a, 60b) derart an das gemeinsame Antriebsmittel (14) mechanisch gekoppelt ist, dass die Abdeckungsblende (60a, 60b) bei der Überführung aus der zweiten Schwenkstellung in die erste Schwenkstellung zunächst über die ersten Schwenkstellung hinausbewegt und anschließend zurück in die erste Schwenkstellung bewegt wird.

9. Schutz- oder Beschattungssystem nach einem der vorstehenden Ansprüche,
**dadurch gekennzeichnet, dass**
ein Federmittel (90b) vorgesehen ist, welches derart angeordnet und/oder ausgebildet ist, dass die Abdeckungsblende (60a, 60b) in der zweiten Schwenkstellung in Richtung der ersten Schwenkstellung momentenbeaufschlagt wird.

10. Schutz- oder Beschattungssystem nach einem der vorstehenden Ansprüche,
**dadurch gekennzeichnet, dass**
die Auszugsvorrichtung (50a, 50b) und die Abdeckungsblende (60a, 60b) für ein Zusammenwirken dergestalt ausgebildet sind, dass diese gemeinsam in der Funktionsstellung der Auszugsvorrichtung (50a, 50b) und der ersten Schwenkstellung der Abdeckungsblende (60a, 60b) eine Festlegungswirkung auf das Flächengebilde (20) bewirken.

11. Schutz-oder Beschattungssystem nach Anspruch 10,
**dadurch gekennzeichnet, dass**
die Auszugsvorrichtung (50a, 50b) beidseitig des Flächengebildes jeweils einen Auszugsvorrichtungsabschnitt aufweist und dass die Auszugsvorrichtungsabschnitte dafür ausgebildet sind, durch die Abdeckungsblende (60a, 60b) in deren erster Schwenkstellung aufeinander zu gedrückt werden, um die Festlegungswirkung zu entfalten.

## Claims

1. Protection or shading system for a motor vehicle, in particular a wind deflector system for a convertible vehicle, having
- a base (10),
- a planar structure (20) that can be pulled out and away from the base (10) in a pull-out direction (2) between a rest position and a function position,
- a rigid end element (30) attached to the planar structure and provided at the distal end of the planar structure (20) relative to the base (10), and
- at least one pulling-out device (50a, 50b) fastened on one side to the base (10) and on the other side to the end element (30),
where the pulling-out device (50a, 50b) is designed to effect, by a mechanical force applied by a drive means (14), a transition of the system from a rest state in which the planar structure (20), the end element (30) and the pulling-out device (50a, 50b) are each in a rest position, to a function state in which the planar structure (20), the end element (30) and the pulling-out device (50a, 50b) are each in a function position,
**characterized by**
a cover strip (60a, 60b) hinge-connected to the base and swivellable into a first swivel position in which it is in contact with the pulling-out device (50a, 50b) in its function position or at least partially surrounds it.

2. Protection or shading system according to Claim 1,
**characterized in that**
the cover strip (60a, 60b) has in its first swivel position a strip section (68b) on both sides of the planar structure (20).

3. Protection or shading system according to Claim 1 or 2,
**characterized in that**
the pulling-out device (50a, 50b) has two lever members (51 b, 52b), where a first lever member (51 b) is swivellably hinge-connected to the base (10) and where a second lever member (52b) is swivellably hinge-connected to the first lever member (51 b) and swivellably hinge-connected to the end element (30).

4. Protection or shading system according to one of the preceding claims,
**characterized in that**
the cover strip (60a, 60b) is swivellable into a second swivel position in which it
- covers the end element (30) in its rest position at least partially in the pull-out direction (2),
- is aligned flush with a central section (32) of the end element (30) and/or
- at least partially covers a pull-out opening (12) provided for the planar structure (20) on the base (10).

5. Protection or shading system according to Claim 4,
**characterized in that**
the end element (30) has a tapered side section (34a, 34b) laterally abutting the central section (32), where in the second swivel position the cover strip (60a, 60b) preferably covers only the tapered side section (34a, 34b).

6. Protection or shading system according to one of the preceding claims, **characterized in that**
the pulling-out device (50a, 50b) and the cover strip (60a, 60b)
- are mechanically coupled to one another or
- are mechanically coupled to a common control member (70b),
such that both a movement of the planar structure (20) in the pull-out direction (2) and a swivel movement of the cover strip (60a, 60b) into a first swivel position can be effected by a common drive means (14), in particular by an electric motor (14) of the system.

7. Protection or shading system according to Claim 6,
**characterized in that**
the mechanical coupling is designed such that during the transition of the system out of the rest state into the function state, effected by the common drive means (14), the movement of the end element (30) does not begin until after the start of the swivel movement of the cover strip (60a, 60b).

8. Protection or shading system according to Claim 6 or 7,
**characterized in that**
the cover strip (60a, 60b) is mechanically coupled to the common drive means (14) such that the cover strip (60a, 60b) is initially moved beyond the first swivel position and then moved back into the first swivel position during the transition from the second swivel position to the first swivel position.

9. Protection or shading system according to one of the preceding claims,
**characterized in that**
a spring means (90b) is provided which is arranged and/or designed such that the cover strip (60a, 60b) in the second swivel position is subjected to a torque in the direction of the first swivel position.

10. Protection or shading system according one of the preceding claims,
**characterized in that**
the pulling-out device (50a, 50b) and the cover strip (60a, 60b) are designed to interact such that in the function position of the pulling-out device (50a, 50b) and in the first swivel position of the cover strip (60a, 60b) they jointly effect a fixing effect onto the planar structure (20).

11. Protection or shading system according to Claim 10,
**characterized in that**
the pulling-out device (50a, 50b) has on each side of the planar structure a pulling-out device section and **in that** the pulling-out device sections are designed to be pressed against one another by the cover strip (60a, 60b) in its first swivel position in order to enable the fixing effect.

## Revendications

1. Système de protection ou d'ombrage pour un véhicule automobile, en particulier système de déflecteur de vent pour un véhicule cabriolet, comprenant
- une base (10),
- une structure plane (20) déployable à partir de la base (10) dans un sens de déploiement (2) entre une position de repos et une position de fonctionnement,
- un élément terminal rigide (30) fixé à la structure plane (20) prévu à l'extrémité distale de la structure plane (20) par rapport à la base (10), et
- au moins un dispositif de déploiement (50a, 50b) fixé d'un côté à la base (10) et de l'autre côté à l'élément terminal (30),
sachant que le dispositif de déploiement (50a, 50b) est conçu, en étant soumis à un force mécanique générée par un moyen d'entraînement (14), pour faire passer le système d'un état de repos, dans lequel la structure plane (20), l'élément terminal (30) et le dispositif de déploiement (50a, 50b) se trouvent respectivement dans une position de repos, à un état fonctionnel, dans lequel la structure plane (20), l'élément terminal (30) et le dispositif de déploiement (50a, 50b) se trouvent dans une position de fonctionnement,
**caractérisé par**
un cache (60a, 60b) fixé à la base de manière articulée, qui est pivotable dans une première position de pivotement dans laquelle il s'appuie sur le dispositif de déploiement (50a, 50b) dans sa position de fonctionnement ou l'entoure au moins partiellement.

2. Système de protection ou d'ombrage selon la revendication 1,
**caractérisé en ce**
**que** dans sa première position de pivotement, le cache (60a, 60b) présente respectivement une partie de cache (68b) de chaque côté de la structure plane (20).

3. Système de protection ou d'ombrage selon la revendication 1 ou 2,
**caractérisé en ce**
**que** le dispositif de déploiement (50a, 50b) présente deux éléments de levier (51b, 52b), sachant qu'un premier élément de levier (51b) est fixé de manière pivotante à la base (10) et qu'un second élément de levier (52b) est fixé de manière pivotante au premier élément de levier (51 b) et de manière pivotante à l'élément terminal (30).

4. Système de protection ou d'ombrage selon l'une des revendications précédentes,
**caractérisé en ce**
**que** le cache (60a, 60b) est pivotable dans une seconde position de pivotement, dans laquelle il
- recouvre au moins partiellement dans le sens de déploiement (2) l'élément terminal (30) dans sa position de repos,
- affleure une partie médiane (32) de l'élément terminal (30) et/ou
- recouvre au moins partiellement une ouverture de déploiement (12) prévue sur la base (10) pour la structure plane (20).

5. Système de protection ou d'ombrage selon la revendication 4,
**caractérisé en ce**
**que** l'élément terminal (30) présente une partie latérale rétrécie (34a, 34b) prolongeant latéralement la partie médiane (32), sachant que dans la seconde position de pivotement, le cache (60a, 60b) recouvre de préférence seulement la partie latérale rétrécie (34a, 34b).

6. Système de protection ou d'ombrage selon l'une des revendications précédentes,
**caractérisé en ce**
**que** le dispositif de déploiement (50a, 50b) et le cache (60a, 60b)
- sont couplés entre eux mécaniquement ou
- sont couplés mécaniquement avec un organe de manoeuvre (70b) commun,
de manière telle que via un moyen d'entraînement (14) commun, en particulier un moteur électrique (14) du système, peuvent être effectués un mouvement de la structure plane (20) dans le sens de déploiement (2) ainsi qu'un mouvement pivotant du cache (60a, 60b) dans la première position de pivotement.

7. Système de protection ou d'ombrage selon la revendication 6,
**caractérisé en ce**
**que** le couplage mécanique est conçu de manière telle que lors du passage du système de l'état de repos à l'état fonctionnel effectué par le moyen d'entraînement (14) commun, le mouvement de la partie terminale (30) ne s'amorce qu'après le début du mouvement pivotant du cache (60a, 60b).

8. Système de protection ou d'ombrage selon la revendication 6 ou 7,
**caractérisé en ce**
**que** le cache (60a, 60b) est couplé mécaniquement au moyen d'entraînement (14) commun de manière telle que lors du passage de la seconde position de pivotement à la première position de pivotement, le cache (60a, 60b) est tout d'abord déplacé en dépassant la première position de pivotement puis ramené dans la première position de pivotement.

9. Système de protection ou d'ombrage selon l'une des revendications précédentes,
**caractérisé en ce**
**qu'**est prévu un élément à ressort (90b) qui est disposé et/ou conçu de manière telle que le cache (60a, 60b) dans la seconde position de pivotement est soumis à un couple de rotation en direction de la première position de pivotement.

10. Système de protection ou d'ombrage selon l'une des revendications précédentes,
**caractérisé en ce**
**que** le dispositif de déploiement (50a, 50b) et le cache (60a, 60b) sont conçus pour agir conjointement de manière telle que dans la position de fonctionnement du dispositif de déploiement (50a, 50b) et dans la première position de pivotement du cache (60a, 60b), ils induisent ensemble un effet de fixation sur la structure plane (20).

11. Système de protection ou d'ombrage selon la revendication 10,
**caractérisé en ce**
**que** le dispositif de déploiement (50a, 50b) présente respectivement de chaque côté de la structure plane une partie de dispositif de déploiement et que les parties de dispositif de déploiement sont conçues pour être pressées l'une contre l'autre par le cache (60a, 60b) dans sa première position de pivotement afin de développer l'effet de fixation.
